(19) Europäisches Patentamt
European Patent Office
Office européen des brevets

(11) **EP 2 806 546 A1**

(12) **EUROPEAN PATENT APPLICATION**

(43) Date of publication:
**26.11.2014 Bulletin 2014/48**

(51) Int Cl.:
*H02K 21/40* (2006.01)          *H02K 21/42* (2006.01)
*H02K 19/10* (2006.01)          *H02K 21/04* (2006.01)

(21) Application number: **13168782.4**

(22) Date of filing: **22.05.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventors:
• **Evans, David
   Sheffield, S11 8UF (GB)**
• **Zhu, Zi-Qiang
   Sheffield, S10 5TR (GB)**

(54) **Partitioned stator permanent magnet machine**

(57)     The present invention relates to an electrical machine (100) comprising a tubular rotor body (130) which is rotatable around a rotary axis (103), wherein the rotor body (130) is made of a ferromagnetic material. A first tubular stator body (110) comprises at least two first windings (101) which are connectable to an electric circuitry, wherein the at least two first windings (101) are arranged one after another along a circumferential direction (104) with respect to the rotary axis (103). A second tubular stator body (120) comprises at least two magnetic sections (102) which are arranged one after another along the circumferential direction (104), wherein each magnetic section (102) comprises a respective magnetic element (105, 901). The rotor body (130) is rotatably supported between the first stator body (110) and the second stator body (120).

FIG 1

Printed by Jouve, 75001 PARIS (FR)

**Description**

Field of invention

The present invention relates to an electrical machine comprising two tubular stator bodies and one tubular rotor body and a method of operating the electrical machine.

Art background

Electrical machines, in particular reluctance motors, comprise non-permanent magnet poles on a ferromagnetic rotor. Generally, torque is generated through magnetic reluctance in reluctance motors. A stator of the motor comprises multiple projecting (salient) electromagnet poles. For example, around the stator projecting electromagnetic poles, windings are wound which are connected to an electric circuitry. The rotor comprises a soft magnetic material which has also multiple projections acting as salient magnetic poles through magnetic reluctance. For switched reluctance motors, the number of rotor poles is typically less than the number of stator poles which minimizes torque ripple and prevents the poles from all lining simultaneously to a position which cannot generate torque.

If the windings at the stator poles are energized, rotor torque is generated in the direction which will reduce reluctance. Thus, the nearest rotor pole with respect to a respective stator pole is pulled from the unaligned position into an alignment with the stator field (i.e. a position of less reluctance). In order to sustain rotation of the rotor, the stator field rotates in advance of the rotor poles in order to pull the rotor constantly along such that a homogeneously rotation is achieved.

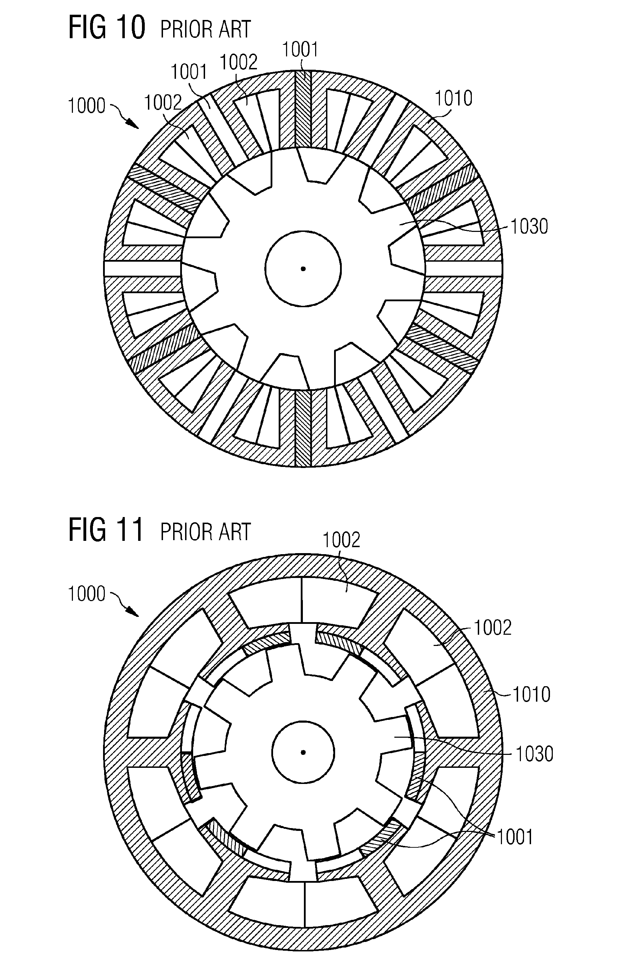

Fig. 10 shows a conventional electrical machine 1000 which is a switched flux machine. Conventional permanent magnets 1001 are sandwiched along a circumferential direction within a conventional stator body 1010. The conventional stator body 1010 further comprises along the circumferential direction between the conventional permanent magnets 1001 conventional slots 1002 into which conventional windings may be installed. The conventional stator body 1010 surrounds a conventional rotor body 1030. The conventional rotor body 1030 determines a switching of magnetic flux to create a back electromotive force (EMF) in the windings arranged within the conventional slots 1002. The teeth of the conventional stator body 1010 are generally over-saturated such that there is a conflict between the size and the volume of the conventional permanent magnets 1001 and the copper of the windings which are arranged along the circumferential direction adjacent to each other. For this reason, the conventional permanent magnets 1001 are located close to the windings which are very hot during operation of the electrical machine. This temperature of the hot windings may negatively affect the conventional permanent magnets 1001.

Fig. 11 shows a conventional electrical machine 1000 which is a flux reversal machine. The conventional stator body 1010 comprises conventional slots 1002 into which respective windings are arranged. Furthermore, conventional permanent magnets 1001 are arranged at an inner surface of the conventional stator body close to a gap between a conventional rotor body 1030 and the conventional stator body 1010. Hence, the air gap size and the distance between the conventional rotor body 1030 and the conventional stator body 1010, respectively, is effectively increased by the location of the conventional permanent magnets 1001 on the tooth surface of the conventional stator body 1010. For this reason, demagnetization due to the large gap and hence weak demagnetization with the stand capacity with the arrangement of the conventional permanent magnets 1001 on an inner surface of the conventional stator body 1010 occur. Furthermore, the location of the conventional permanent magnets 1001 and the inner surface of the teeth of the conventional stator body 1010 are exposed to large radial force variation during operation of the electrical machine.

Summary of the Invention

It may be an object of the present invention to provide an electrical machine, in particular of the reluctance motor type, which comprises proper temperature conditions for the components, e.g. the permanent magnets, of the electrical machine.

This object is solved by an electrical machine, in particular by a reluctance electrical machine, and a method of operating the electrical machine.

According to a first aspect of the present invention, an electrical machine, such as a reluctance motor or generator, is presented. The electrical machine comprises a tubular rotor body which is rotatable around a rotary axis. The rotor body is made of a ferromagnetic material. The electrical machine further comprises a first tubular stator body which comprises at least two first windings which are connectable to an electric circuitry. The at least two windings are arranged one after another along a circumferential direction with respect to the rotary axis. The electrical machine further comprises a second tubular body, which comprises at least two magnetic sections which are arranged one after another along the circumferential direction. Each magnetic section comprises a respective magnetic element. The rotor body is rotatably supported between the first stator body and the second stator body.

According to a further aspect of the present invention, a method of operating the above-described electrical machine is presented. According to the method, the tubular rotor body is rotated with respect to the first tubular stator body and the second tubular stator body around the rotary axis.

The electrical machine may be for example an electrical motor or a generator, in particular a reluctance motor type. Specifically, the electrical machine may be a wind power generator of a wind turbine.

The electrical machine comprises the above described rotor and the stators. A respective stator for the electrical machine may be for example a respective stator which surrounds the (internal) rotor of the electrical machine or may be a stator which is surrounded by the (external) rotor of the electrical machine.

A respective stator body generally comprises a tubular profile with a ring-shaped cross-sectional shape. Accordingly, the rotor body of the rotor comprises a corresponding tubular profile with a ring-shaped cross-sectional shape. In the meaning of the present application, the ring-shaped cross-sectional shape may be a circular ring but may be a rectangular or polygonal ring which comprises edges. Elliptical cross-sectional shapes are also possible.

The rotor body comprises a center axis which is generally coaxial with a rotary axis of the rotor. Around the rotary axis and for example along a surface of the tubular profile of the rotor body, the circumferential direction is defined. Furthermore, a radial direction runs from the rotor body to the rotary axis, wherein the radial direction is perpendicular to the circumferential direction and the rotary axis and runs through the rotary axis. The rotor body defines for example a so-called rotor yoke.

Each of the above-described permanent magnets comprises a respective magnetic flux direction through the respective permanent magnet. Specifically, each permanent magnet comprises a north pole, where the magnetic flux leaves the body of the permanent magnet and a south pole, where the magnetic flux enters the body of the permanent magnet. The respective permanent magnets may form a respective magnet pole. Each permanent magnet may comprise a plurality of segmented permanent magnet elements. The resultant of the magnetic flux directions of the plurality of segmented magnet elements forms the respective magnetic flux direction of the permanent magnet.

The permanent magnets are made from a so-called hard ferromagnetic material such as alnico, ferrite and rare-earth magnets (e.g. SmCo and NdFeB) that are subjected to special processing in a powerful magnetic field during manufacture in order to align the internal microcrystalline structure which makes them very hard to demagnetize. The permanent magnets may be formed of sintered or bonded isotropic or anisotropic magnets.

The respective first windings are connected to an electrical circuitry, wherein the first windings may be grouped and are connected to a three-phase, four-phase, five-phase or any further multiple-phase electrical power circuitry.

By the arrangement of the electrical machine according to the present invention, the windings and the permanent magnets, which are necessary for operating the electrical machine, in particular of a reluctance type, are separated and arranged to different tubular stator bodies which are in particular structurally separated from each other. Between the first tubular stator body and the second tubular stator body, the rotor body is arranged such that the rotor body structurally separates the first stator body from the second stator body.

This arrangement of the permanent magnets and the windings within two structurally separated stator bodies removes the conflict for the volume, i.e. the installation space, between the hot copper windings and the permanent magnets. Hence, also an improved and a more efficient cooling for the windings are generated because more space for cooling installations for the windings is given. This leads also to improved thermal conditions for the permanent magnet. Because there is more space for the installation of the permanent magnets and the windings at the respective stator body, more flexibility for the installation of the respective windings and permanent magnets is achieved, such that a more effective arrangement for the windings and the permanent magnets is given such that the overall efficiency of the electrical machine may be improved. Moreover, the number of permanent magnets may be halved in comparison to other conventional stators.

According to a further exemplary embodiment, the rotor body comprises a plurality of rotor teeth arranged one after another along the circumferential direction to the thereby form a salient rotor. Hence, the rotor body form a salient rotor.

According to a further exemplary embodiment, the first stator body surrounds the rotor body wherein the second stator body is surrounded by the rotor body and the first stator body. In other words, the first stator body comprising the windings is an outer stator body and the second stator body comprising the permanent magnets is an inner stator body.

Alternatively, the second stator body surrounds the rotor body and the first stator body is surrounded by the rotor body and the first stator body. Hence, the second stator body which comprises the permanent magnets is an outer stator body and the first stator body comprising the windings is an inner stator body.

According to a further exemplary embodiment, the magnetic section comprises a respective permanent magnet or each magnet section comprises respective second windings. The respective second windings may act as a permanent magnet and/or may be connectable to the electrical circuitry or a respective further electrical circuitry.

According to a further exemplary embodiment, the magnet section is formed as slots or recesses which are formed into the second stator body one after another along the circumferential direction. In particular, the second stator body is formed as a framework in the shape of a basket or a cage, wherein the respective magnet sections form cut-outs and thereby separate adjacent material sections of the second stator body.

According to a further exemplary embodiment, the magnetic sections are provided onto a surface of the second stator body, which surface faces the rotor body.

According to a further exemplary embodiment, the first tubular stator body comprises at least two further permanent magnets arranged one after another along the circumferential direction. Hence, the first tubular stator body may comprise both, the first windings and further permanent magnets which are arranged one after another along the circumferential direction.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1 shows a schematical view of an exemplary embodiment of the present invention comprising an inner stator body with permanent magnets and an outer stator body with windings.

Figs. 2A-2D show schematical views of the electrical machine together with the magnetic field generation during rotation of the rotor body according to an exemplary embodiment of the present invention;

Fig. 3 shows a diagram illustrating the coil flux linkage with respect to the rotor position in accordance with the rotor body position as shown in Figs. 2A-2D;

Fig. 4 shows a diagram showing a rated torque in comparison to a rotor position;

Fig. 5 shows a diagram showing a back EMF with respect to the rotor position;

Fig. 6 shows a schematical view of an electrical machine comprising an inner stator body comprising windings and an outer stator body comprising permanent magnets according to an exemplary embodiment of the present invention;

Fig. 7 shows a schematical view of an electrical machine comprising an inner stator body comprising permanent magnets at its outer surface and an outer stator body comprising windings according to an exemplary embodiment of the present invention;

Fig. 8 shows a schematical view of an exemplary embodiment of the electrical machine comprising an outer stator body comprising permanent magnets at its inner surface and an inner stator body comprising windings according to an exemplary embodiment of the present invention;

Fig. 9 shows an electrical machine comprising an inner stator body comprising windings and an outer stator body comprising windings according to an exemplary embodiment of the present invention;

Fig. 10 and 11 show schematical views of conventional electric motors;

Fig. 12 shows a schematical view of an exemplary embodiment of the present invention comprising an inner stator body with permanent magnets and an outer stator body with windings, wherein the windings are arranged in a single layer winding type;

Fig. 13 shows a schematical view of an exemplary embodiment of the present invention comprising an inner stator body with permanent magnets and an outer stator body with windings, wherein the windings are arranged in a double layer winding type; and

Fig. 14 shows a schematical view of an exemplary embodiment of the present invention comprising an inner stator body with permanent magnets and an outer stator body with windings, wherein the windings are arranged in a double layer winding type.

Detailed Description

The illustrations in the drawings are schematic. It is noted that in different figures similar or identical elements are provided with the same reference signs.

For sake of clarity, not all elements and features of the same type are indicated by reference signs. From each group of elements, only some of these elements are indicated by respective reference signs. However, for the skilled person, the other elements of a respective group which are not indicated by respective reference signs will be clearly assigned to the elements of the group which are indicated by reference signs.

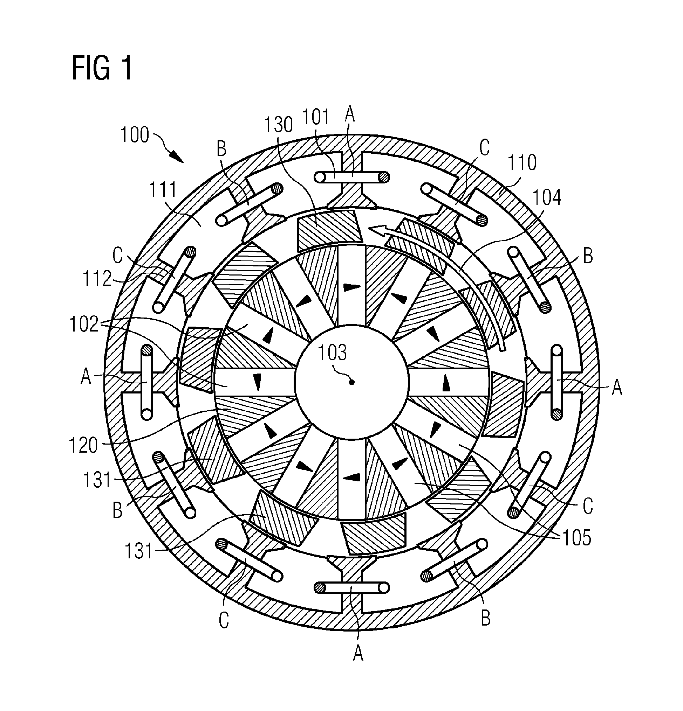

Fig. 1 shows an electrical machine 100 according to an exemplary embodiment of the present invention. The electrical machine 100 comprises a tubular rotor body 130 which is rotatable around the rotary axis 103. The rotor body 130 is made of a ferromagnetic material, such as iron.

The electrical machine 100 further comprises a first tubular stator body 110 which comprises at least two or a plurality of first windings 101 which are connectable to an electric circuitry. The at least two first windings 101 are arranged one after another along a circumferential direction 104 with respect to the rotary axis 103.

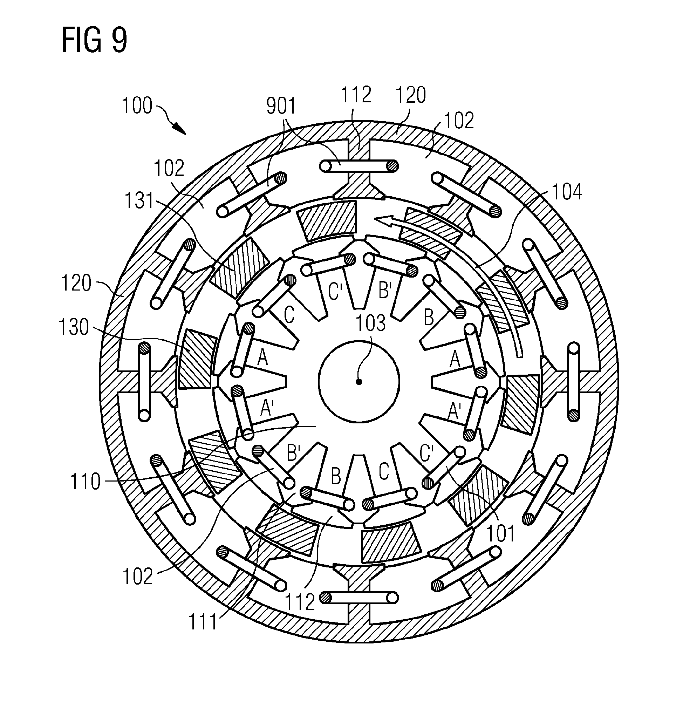

The electrical machine 100 further comprises a second tubular stator body 120 which comprises at least two or a plurality of magnetic sections 102 each comprising magnetic elements 105, 901 (see fig. 9) which are arranged one after another along the circumferential direction 104. Specifically, the polarity of adjacent permanent magnets 105 differs with respect to each other. The magnetic elements are for example as shown in Fig. 1 permanent magnets 105. The rotor body 130 is rotatably supported between the first stator body 110 and the second stator body 120. For example, the rotor body 130 may rotate between the first stator body 110 and the second stator body 120 along the circumferential direction 104 as indicated by the arrow. In particular, the rotor body 130 comprises a plurality of rotor teeth 131.

In the exemplary embodiment shown in Fig. 1, the first stator body comprising the first windings 101 surround the rotor body 130 and is thus an outer stator body. The second stator body 120 which comprises the magnetic section 102 and the respective magnetic elements 105 is surrounded by the rotor body 130 and the first stator body 110 and is thus an inner stator body.

Hence, the magnetic sections 102 which comprise respective permanent magnets 105 are spatially separated from the windings 101. Hence, the temperature of the hot windings 101 does not negatively affect the magnet elements, i.e. the permanent magnets 105, in the magnetic sections 102.

Furthermore, because no further permanent magnets 105 or fewer permanent magnets 105 have to be installed at the first stator body 110, the stator slots 111 which are formed between respective teeth 112 may comprise a larger volume. Hence, a better cooling for the respective first windings 101 is provided. Alternatively, more loops of windings of the first windings 101 may be installed into larger stator slots 111.

In Fig. 1 a so-called double layer winding arrangement is shown, wherein around each tooth 112 a respective first winding 101 is wound.

Furthermore, as shown in Fig. 1, the magnetic sections 102 are formed as cut-outs or through-holes within the second stator body 120, such that the permanent magnets 105 are arranged in such a way that the permanent magnets 105 extend from a radially outer surface to a radially inner surface of the second stator body 120. Hence, the permanent magnets 105 separate and partition the second stator body 120 along the circumferential direction 104.

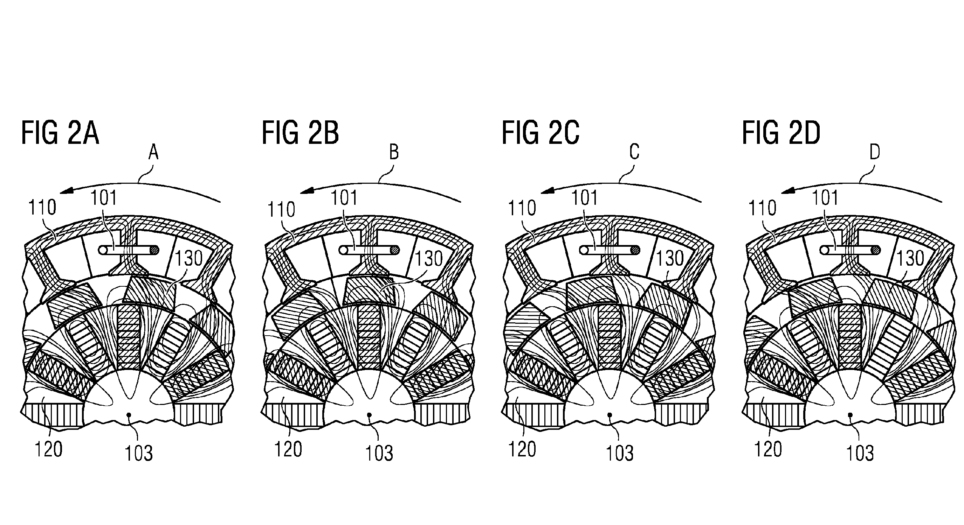

Figs. 2A-2D illustrate the formation of a magnetic field during a rotation of the rotor 130 along the circumferential direction 104 between the first stator body 110 and the second stator body 120. The electrical machine 100 shown in Figs. 2A-2D comprises a similar design as shown in Fig. 1. In contrast to the electrical machine 100 shown in Fig. 1, the electrical machine 100 shown in Figs. 2A-2D comprises a so-called single layer winding arrangement, wherein around every second tooth 112 a respective first winding 101 is wound and wherein every second tooth 112 is free of any first winding 101.

A bipolar flux linkage achieved by the electrical machine 100 and the respective back EMF (back electromotive force) is generated by rotation of the rotor body 130 as shown in Figs. 2A-2D. In Figs. 2A-2D, a flux linkage of a single winding 101 for four rotor positions (A-D) is shown.

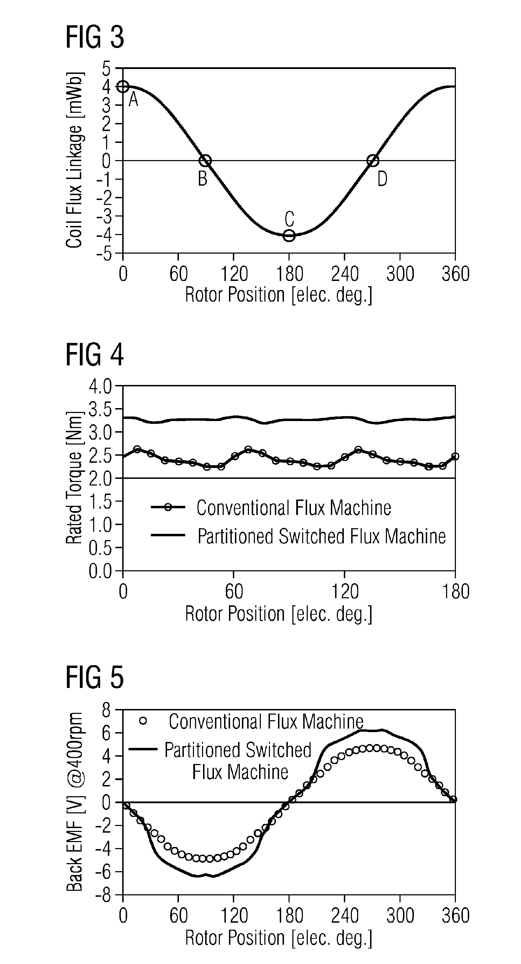

Fig. 3 shows a diagram which illustrates a coil flux linkage [mWb] with respect to the rotor position [elec. deg]. Specifically, the rotor positions A, B, C and D are visualized in the Figs. 2A-2D. Fig. 2A shows the rotor position A, Fig. 2B shows the rotor position B, Fig. 2C shows the rotor position C and Fig. 2D shows the rotor position D. The flux linkage over a complete rotor body cycle is shown in Fig. 3, wherein the respective rotor body positions A-D are highlighted.

Hence, the maximum and the minimum coil flux linkage is achieved by the rotor positions A (see Fig. 2A) and C (see Fig. 2C).

If current is injected into the windings 101, the product of current and induced EMF creates power and hence a mechanical torque. Hence, the electrical machine 100 may in this manner operate as a motor or a generator with a respective current or torque input, respectively.

The relationship between the number of magnet elements (e.g. permanent magnets 105), rotor poles (formed by respective rotor teeth 131) and first windings 101 (or respective winding configurations) is:

$$p_{winding} = p_{magnet} - N_{rotor\ poles}$$

The number of pole pairs produced by the winding $p_{winding}$ equals the number of magnet pole pairs $p_{magnet}$ minus the number of rotor poles $N_{rotor\ poles}$.

In Fig. 4, a rated torque [Nm] is shown with respect to a rotor position and in Fig. 5, a back EMF [v] at 400 rounds per minute [rpm] over the rotor position [deg. elec.] is shown. The rated torque and the back EMF is given in the diagrams in Fig. 4 and Fig. 5 for the partition switch flux machine according to the present invention and to a conventional flux machine.

It is shown, that the partition switch flux machine (electrical machine 100) according to the present invention generates a higher rated torque and a higher back EMF in comparison to conventional flux machines. Summarizing, separating the magnet elements respectively the magnetic sections 102 from the first windings 101 and arrange them at respective first and second stator bodies 110, 120, the back EMF and the torque density is increased in comparison to conventional partition switch flux machines.

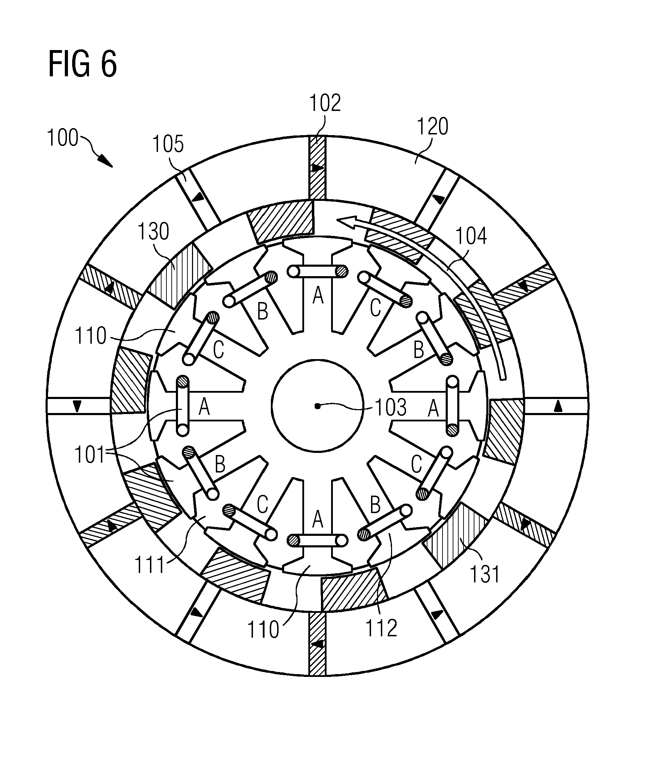

Fig. 6 shows a further exemplary embodiment of the electrical machine. The second stator body 120 comprising the respective magnetic sections 102 with the permanent magnets 105 is an outer stator body and the first stator body 110 comprising the respective first windings 101 is an inner stator body. The rotor body 130 is arranged between the first stator body 110 and the second stator body 120. Furthermore, the second stator body 120 comprises respective cut-outs or through-holes which are formed between a radially outer surface and a radially inner surface of the second stator body. The respective cut-outs or through-holes are formed one after another along the circumferential direction 104.

The respective first windings 101 are connected to an electrical circuitry, wherein A, B, C indicate respective groups of first windings 101 which are connected to a three-phase electrical power circuitry. In Fig. 6 a so-called double layer winding arrangement is shown, wherein around each tooth 112 a respective first winding 101 is wound.

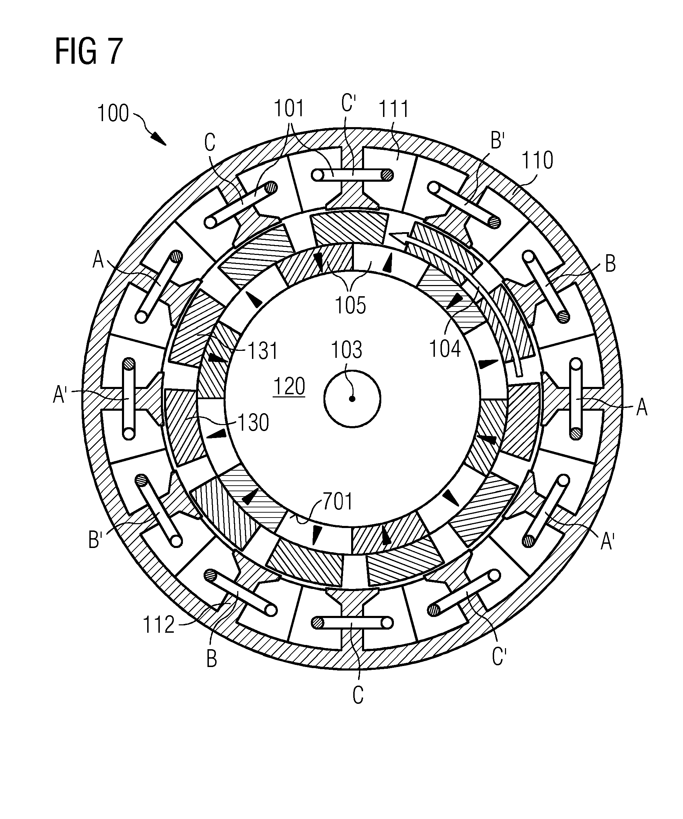

Fig. 7 shows a further exemplary embodiment of the electrical machine 100, wherein the second stator body 120 is an inner stator body and the first stator body 110 is an outer stator body. In comparison to the electrical machine 100 shown in Fig. 1, the electrical machine 100 shown in Fig. 7 differs in the arrangement of the permanent magnets 105. The permanent magnets 105 are arranged onto a surface 701, in particular at a radially outer surface of the second stator body 120. The respective permanent magnets 105 are arranged one after another along the circumferential direction 104. Specifically, the polarity of adjacent permanent magnets 105 differs with respect to each other. In Fig. 7 a so-called double layer winding arrangement is shown, wherein around each tooth 112 a respective first winding 101 is wound.

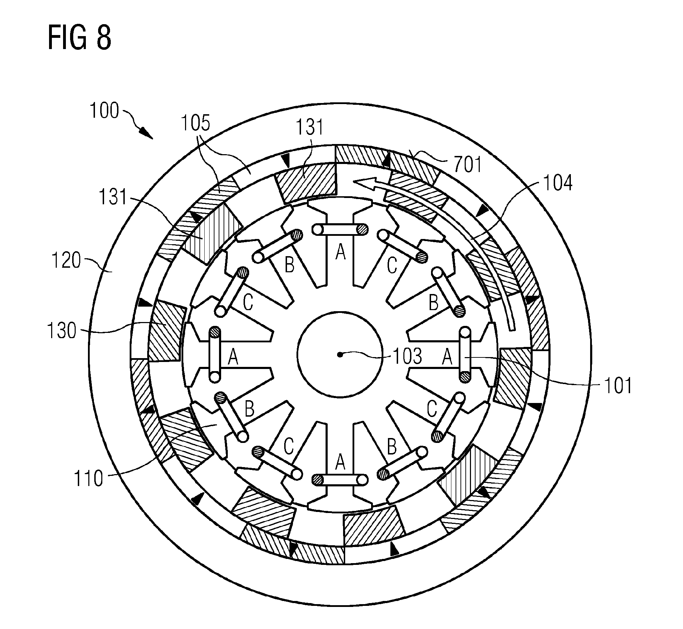

Fig. 8 shows a further exemplary embodiment of the electrical machine 100, wherein the second stator body 120 is an outer stator body and the first stator body is an inner stator body. The exemplary embodiment of the electrical machine 100 shown in Fig. 8 differs from the exemplary embodiment of the electrical machine 100 shown in Fig. 6 in that the permanent magnets 105 are arranged at a surface 701, in particular at a radially inner surface, of the second stator body 120. In Fig. 8 a so-called double layer winding arrangement is shown, wherein around each tooth 112 a respective first winding 101 is wound.

Fig. 9 shows a further exemplary embodiment of the electrical machine 100, wherein the first stator body 110 comprising the first windings 101 is an inner stator body and the second stator body 120 is an outer stator body. Specifically, the outer stator body 120 comprises second windings 901 as magnetic elements which are arranged within the magnetic sections 102 which form slots within the second stator body 120. Hence, instead of the permanent magnets 105 or additional thereto, a plurality of second windings 901 may be arranged along the circumferential direction 104. In Fig. 9 a so-called double layer winding arrangement is shown, wherein around each tooth 112 a respective first winding 101 is wound.

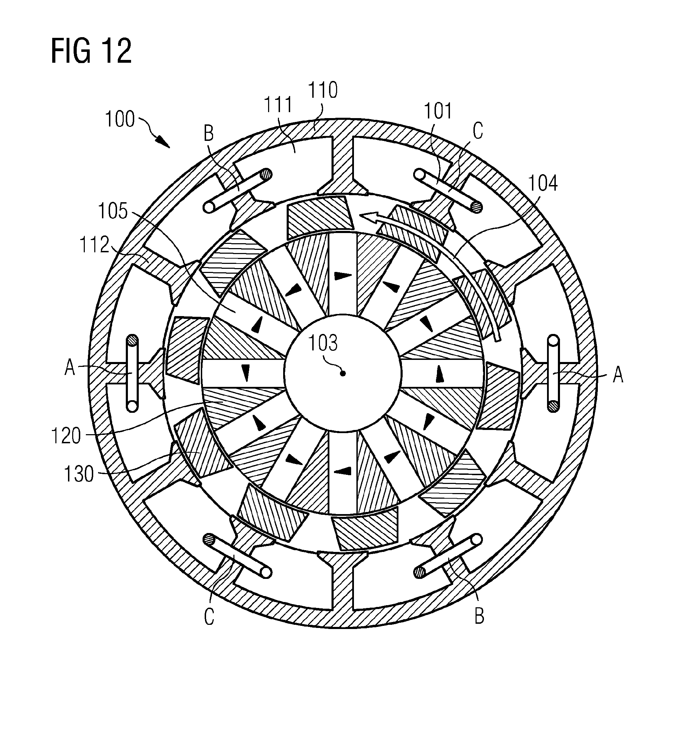

Fig. 12 shows a further exemplary embodiment of the electrical machine 100, wherein the first stator body 110 comprising the first windings 101 is an outer stator body and the second stator body 120 is an inner stator body. The electrical machine 100 shown in Fig. 12 is similar with the electrical machine 100 shown in Fig. 1. The electrical machine 100 comprises for example ten permanent magnets 105 arranged at the second stator body 120.

Furthermore, in contrast to the electrical machine 100 shown in Fig. 1, a so-called single layer winding arrangement is shown in Fig. 12, wherein around each second tooth 112 a respective first winding 101 is wound. Hence, the second teeth 120 comprising a respective first winding 101 alternate along the circumferential direction 104 with respective second teeth 120 which are free of any first windings 101.

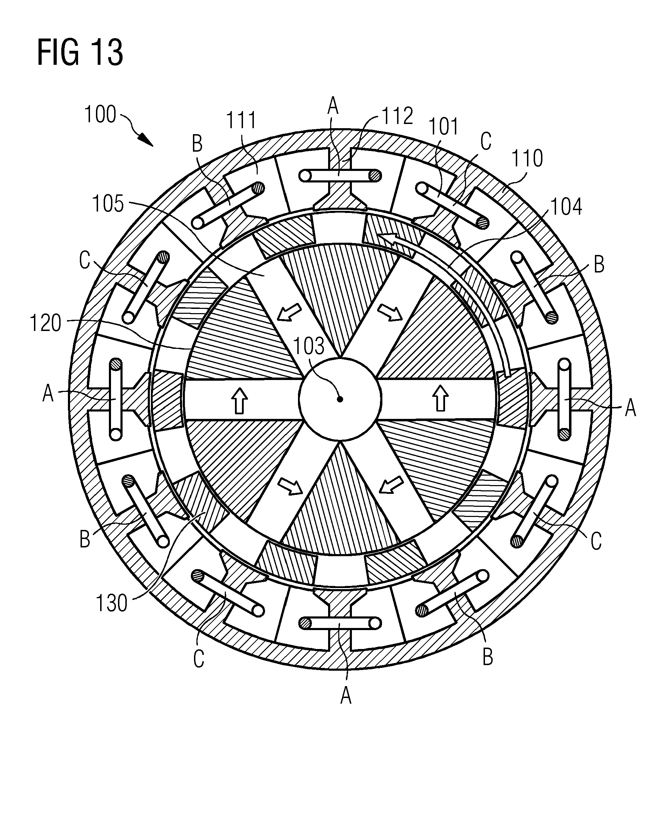

Fig. 13 shows a further exemplary embodiment of the electrical machine 100, wherein the first stator body 110 comprising the first windings 101 is an outer stator body and the second stator body 120 is an inner stator body. The electrical machine 100 shown in Fig. 13 is similar with the electrical machine 100 shown in Fig. 1.

Furthermore, in contrast to the electrical machine 100 shown in Fig. 1, the electrical machine 100 shown in Fig. 13 comprises for example six permanent magnets 105 arranged at the second stator body 120 and thus (almost) halve of the amount of permanent magnets 105 used in the exemplary embodiments of Fig. 1 or Fig. 12, for example.

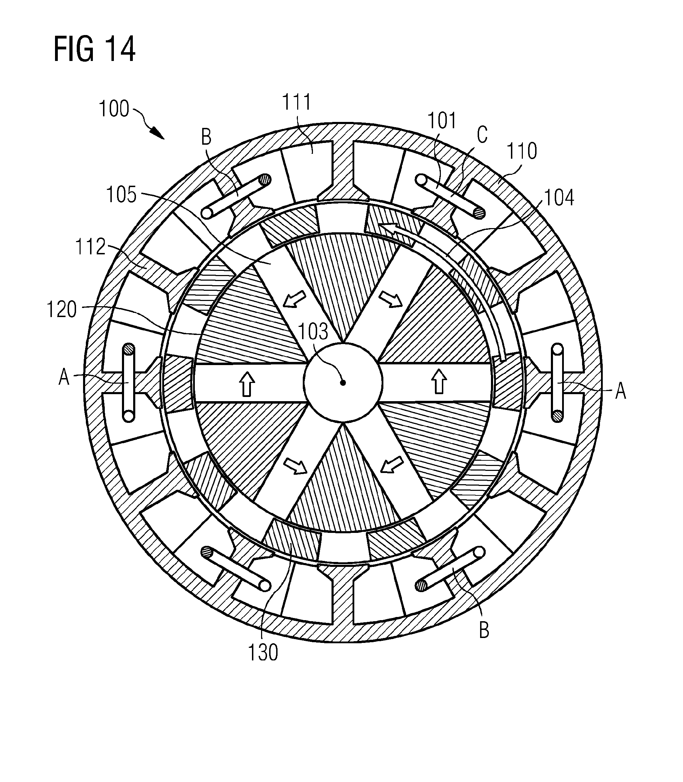

Fig. 14 shows a further exemplary embodiment of the electrical machine 100, wherein the first stator body 110 comprising the first windings 101 is an outer stator body and the second stator body 120 is an inner stator body. The electrical machine 100 shown in Fig. 14 is similar with the electrical machine 100 shown in Fig. 12.

Furthermore, in contrast to the electrical machine 100 shown in Fig. 12, the electrical machine 100 shown in Fig. 14 comprises for example six permanent magnets 105 arranged at the second stator body 120 and thus (almost) halve of the amount of permanent magnets 105 used in the exemplary embodiments of Fig. 1 or Fig. 12, for example.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Electrical machine (100), comprising
   a tubular rotor body (130) which is rotatable around a rotary axis (103),
   wherein the rotor body (130) is made of a ferromagnetic material,
   a first tubular stator body (110) which comprises at least two first windings (101) which are connectable to an electric circuitry,
   wherein the at least two first windings (101) are arranged one after another along a circumferential direction (104) with respect to the rotary axis (103),
   a second tubular stator body (120) which comprises at least two magnetic sections (102) which are arranged one after another along the circumferential direction (104), wherein each magnetic section (102) comprises a respective magnetic element (105, 901),
   wherein the rotor body (130) is rotatably arranged between the first stator body (110) and the second stator body (120).

2. Electrical machine (100) according to claim 1,
   wherein the rotor body (130) comprises a plurality of rotor teeth arranged one after another along the circumferential direction (104).

3. Electrical machine (100) according to claim 1 or 2, wherein the first stator body (110) surrounds the rotor body (130), wherein the second stator body (120) is surrounded by the rotor body (130) and the first stator body (110).

4. Electrical machine (100) according to claim 1 or 2,
   wherein the second stator surrounds the rotor body (130), wherein the first stator body (110) is surrounded by the rotor body (130) and the first stator body (110).

5. Electrical machine (100) according to one of the claims 1 to 4,
   wherein the at least one magnet element is a permanent magnet (105).

6. Electrical machine (100) according to one of the claims 1 to 5,
   wherein the at least one magnet element is a second winding (901) which are in particular connectable to the electric circuitry.

7. Electrical machine (100) according to one of the claims 1 to 6,
   wherein the magnetic sections (102) are respective slots which are formed into the second stator body (120) one after another along the circumferential direction (104).

8. Electrical machine (100) according to one of the claims 1 to 7,
   wherein the magnetic sections (102) are provided onto a surface (701) of the second stator body (120), which surface (701) faces the rotor body (130).

9. Electrical machine (100) according to one of the claims 1 to 8,

wherein the first tubular stator body (110) comprises at least two further permanent magnets arranged one after another along the circumferential direction (104).

**10.** Method of operating an electrical machine (100), the method comprising

rotating a tubular rotor body (130) with respect to a first tubular stator body (110) and a second tubular stator body (120) around a rotary axis (103),

wherein the rotor body (130) is made of a ferromagnetic material,

wherein the first rotor body (130) comprises at least two first windings (101) which are connectable to an electric circuitry,

wherein the at least two first windings (101) are arranged one after another along a circumferential direction (104) with respect to the rotary axis (103),

wherein the second stator body (120) comprises at least two magnetic sections (102) which are arranged one after another along the circumferential direction (104),

wherein each magnetic section (102) comprises a respective magnetic element (105, 901), and

wherein the rotor body (130) is rotatably supported between the first stator body (110) and the second stator body (120).

# FIG 1

FIG 2A

FIG 2B

FIG 2C

FIG 2D

FIG 3

FIG 4

FIG 5

FIG 6

FIG 7

FIG 8

# FIG 9

## FIG 10 PRIOR ART

## FIG 11 PRIOR ART

FIG 12

FIG 13

FIG 14

Europäisches
Patentamt

European
Patent Office

Office européen
des brevets

## EUROPEAN SEARCH REPORT

**Application Number**

EP 13 16 8782

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 528 207 A1 (DELPHI AUTOMOTIVE SYSTEMS LUXEMBOURG SA [LU]) 28 November 2012 (2012-11-28) * the whole document * ----- | 1-10 | INV. H02K21/40 H02K21/42 H02K19/10 H02K21/04 |
| X | GB 1 196 213 A (KURAKIN ALEXANDR SERGEEVICH [RU]; JUFEROV FEDOR MIKHAILOVICH [RU]) 24 June 1970 (1970-06-24) * figures 1, 2, 3, 4, 5, 6 * * page 2, line 47 - line 117 * * page 2, line 3 - line 18 * ----- | 1-10 | |
| X | WO 2012/078372 A2 (COPELAND CARL E [US]; PROTOTUS LTD [BZ] COPELAND CARL E JR [US]; PROTO) 14 June 2012 (2012-06-14) * abstract * * figures 1, 2, 3, 4 * * figures 20a, 20b, 21a, 21b, 22a, 22b, 23a, 23b, 25a, 25b * * figures 26, 27 * * paragraphs [0004], [0072] - [0078], [0104] - [0117] * ----- | 1,2,4,5, 10 | **TECHNICAL FIELDS SEARCHED (IPC)** H02K |

The present search report has been drawn up for all claims

| Place of search | Date of completion of the search | Examiner |
|---|---|---|
| The Hague | 7 August 2013 | Schmitt, Gilles |

EPO FORM 1503 03.82 (P04C01)

**EP 2 806 546 A1**

## ANNEX TO THE EUROPEAN SEARCH REPORT
## ON EUROPEAN PATENT APPLICATION NO.

EP 13 16 8782

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2013

| Patent document cited in search report | | Publication date | Patent family member(s) | | Publication date |
|---|---|---|---|---|---|
| EP 2528207 | A1 | 28-11-2012 | NONE | | |
| GB 1196213 | A | 24-06-1970 | NONE | | |
| WO 2012078372 | A2 | 14-06-2012 | AU | 2011338804 A1 | 13-06-2013 |
| | | | CA | 2820015 A1 | 14-06-2012 |
| | | | SG | 190413 A1 | 28-06-2013 |
| | | | WO | 2012078372 A2 | 14-06-2012 |

EPO FORM P0459

For more details about this annex : see Official Journal of the European Patent Office, No. 12/82

21